(19) **Europäisches Patentamt / European Patent Office / Office européen des brevets**

(11) **EP 2 087 797 B1**

(12) **EUROPEAN PATENT SPECIFICATION**

(45) Date of publication and mention of the grant of the patent:
**17.08.2016 Bulletin 2016/33**

(21) Application number: **08740802.7**

(22) Date of filing: **23.04.2008**

(51) Int Cl.:
*A23L 27/10* (2016.01)     *A23L 11/00* (2016.01)
*A23L 17/00* (2016.01)     *A23L 27/00* (2016.01)
*A23L 2/56* (2006.01)

(86) International application number:
**PCT/JP2008/057875**

(87) International publication number:
**WO 2008/133284 (06.11.2008 Gazette 2008/45)**

(54) **FLAVOR-IMPROVING AGENT FOR FOODS AND DRINKS**

GESCHMACKSVERSTÄRKUNGSMITTEL FÜR NAHRUNGSMITTEL UND GETRÄNKE

AGENT EXHAUSTEUR DE GOÛT POUR ALIMENTS ET BOISSONS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **25.04.2007 JP 2007115952**

(43) Date of publication of application:
**12.08.2009 Bulletin 2009/33**

(73) Proprietor: **ARKRAY, Inc.**
**Minami-ku**
**Kyoto-shi**
**Kyoto 601-8045 (JP)**

(72) Inventors:
• **YAGI, Masayuki**
  **Kyoto 601-8045, (JP)**
• **SAITO, Yuko**
  **Kyoto 601-8045, (JP)**

(74) Representative: **Hoffmann Eitle**
**Patent- und Rechtsanwälte PartmbB**
**Arabellastraße 30**
**81925 München (DE)**

(56) References cited:
**EP-A1- 1 554 938    EP-A1- 1 604 647**

• **DATABASE WPI Week 200375 Thomson Scientific, London, GB; AN 2003-793475 XP002663842, & JP 2003 212770 A (ICHIMARU PHARCOS INC) 30 July 2003 (2003-07-30)**
• **YAGI M. ET AL.: 'Kongo Herb Extract no Maillard Hanno Sogai Sayo' DAI 127 KAI PROCEEDINGS OF THE ANNUAL MEETING OF THE PHARMACEUTICAL SOCIETY OF JAPAN no. 2, 05 March 2007, page 167 + ABSTR. NO. 28P1-AM231), XP008111182**
• **KAWAI H. ET AL.: 'Antiageing no Kanten kara Mita Kongo Herb Extract no Hito eno Sayo' DAI 127 KAI PROCEEDINGS OF THE ANNUAL MEETING OF THE PHARMACEUTICAL SOCIETY OF JAPAN no. 2, 05 March 2007, page 167 + ABSTR. NO. 28P1-AM232, XP008111184**
• **'Camomile-chu no Ko Karei Seibun Chamameloside o Kakunin' AKUREI, OKAYAMA RIDAI NADOTO, NIKKAN KOGYO SHINBUN 04 October 2006, page 15**
• **NAKATANI N.: 'Shokuhin Kagaku', 10 September 1997, ASAKURA PUBLISHING CO., LTD. pages 150 - 157, XP003025818**
• **WEIHMULLER F.: 'Seasonings & Herbs: From Folklore to Flavors' PREP. FOODS vol. 165, no. 3, 1996, pages 42 - 43, 46, 48, 50, 52, 54, XP008109891**

Remarks:
The file contains technical information submitted after the application was filed and not included in this specification

**Description**

Technical Field

The present invention relates to a use of an edible composition for improving flavor of food and beverage.

Background Art

In some cases, for example, food and beverage may have a peculiar smell from material, or a peculiar smell may be generated in processes of manufacturing, storing, cooking, etc. Since smell as well as taste and texture affects the flavor of food and beverage, a flavor improving agent is developed for food and beverage whose flavor has been damaged by smell. As the flavor improving agent, for example, an agent is known that suppresses smell of food and beverage by masking the smell thereof.

As for the flavor improving agent, the followings are reported. First, an aroma chemical is reported. When food and beverage is flavored by adding an aroma chemical, the smell damaging the flavor is masked, and the flavor of food and beverage can be improved. Examples of the aroma chemical include methyl anthranilate, acetophenone, butyl acetate, etc. Next, ethyl octanoate, ethyl decanoate, etc. are reported (Patent Documents 1 and 2). By adding them to food and beverage that gives off the peculiar smell containing collagen, collagen peptide, gelatin, various types of protein and decomposed substance thereof, etc. or has the deteriorated smell of oil, the smell can be reduced. Further, a composition containing trisaccharide and tetrasaccharide having a branched structure is reported (Patent Document 3). By adding this composition to food and beverage made of soy beans, the peculiar smell of soy protein is masked, and the flavor thereof can be improved.

However, many of these flavor improving agents are made of materials that have no dietary history, i.e., materials that have not been eaten as food, and safety is not supported by dietary history. Examples of manufacturing, in which materials having no dietary history are used in an industrial manufacturing, are as follows. The methyl anthranilate is synthesized by reacting anthranilic acid and methyl alcohol in the presence of sulfuric acid. Further, acetophenone is synthesized by reacting benzene and acetic anhydride or acethylene in the presence of aluminum chloride anhydrous, for example, and butyl acetate is synthesized by reacting acetic acid and butanol concentrated sulfuric acid, for example. Since the material that does not have dietary history is used, generally, purification is required and manufacturing process may be complicated. The masking effect of the aforementioned aroma chemical has an upper limit. Further, according to the nature of the aroma chemical, if the large amount of the aroma chemical is added, there is a possibility of damaging the flavor and quality of food and beverage. Moreover, if the flavor improving agent itself has a peculiar smell, depending on its additive amount, there is a possibility of damaging the flavor of food. Even when there is no problem in safety, those flavor improving agents usually are regarded not as food but as food additive.

[Patent Document 1] JP 2006-197856 A
[Patent Document 2] JP 2006-197857 A
[Patent Document 3] JP 2006-280310 A

Disclosure of Invention

Hence, the present invention is intended to improve flavor of food and beverage by using an edible composition comprising materials that have dietary history, i.e., materials that have been eaten as food, wherein the edible composition suppresses a peculiar smell of food and beverage.

In order to achieve the aforementioned object, the present invention uses an edible composition as defined in claim 1.

According to the use of the present invention, for example, a peculiar smell of material of food and beverage, and smell generated in processes of manufacturing, processing, storing, etc. can be suppressed. Further, according to the use of the present invention, the aforementioned smell of food and beverage can be suppressed by masking, for example. In addition, generation of a smell component in the aforementioned processes can be suppressed by applying the edible composition in advance of each process. Specifically, for example, maillard reaction is inhibited and generation of a smell component due to the maillard reaction can be suppressed. Further, extracts contained in the edible composition are derived from plants (herb) that have dietary history and are familiar in dietary life. Therefore, safety of the use of the edible composition is supported sufficiently and flavor of the food and beverage to which the edible composition is added would not be damaged. Further, since preparation of the extract from each aforementioned herb is very simple, the edible composition is suitable for industrial manufacturing and can be manufactured at a low price.

Brief Description of Drawings

FIG.1 is a graph showing the relationship between an edible composition concentration and a maillard reaction inhibition rate in Example 5 of the present invention.

FIG.2 is a graph showing the relationship between a chamomile extract concentration and a maillard reaction inhibition rate in Example 6 of the present invention.

Best Mode for Carrying Out the Invention

As described above, the edible composition used in the present invention is characterized by containing a mixed extract from a plant of genus *Crataegus* of the family Rosaceae, a plant of genus *Houttuynia* of the family Saururaceae, a plant of genus *Vitis* of the family Vitaceae, and a plant of genus *Anthemis* of the family Compositae or genus *Matricaria* of the family Compositae.

Since the edible composition contains the mixed extract as described above, the edible composition is clearly excellent in safety.

In the present invention, examples of the plant of genus *Crataegus* of the family Rosaceae (*Rosaceae Crataegus*) include Midland hawthorn (*Crataegus oxyacantha* L.), hawthorn (*C. cuneata* Sieb. et Zucc.), etc. The extract from genus *Crataegus* of the family Rosaceae may be any extract from flower, flowering spike, fruit skin, fruit, stem, leaf, branch, branch with leaf, trunk, tree bark, rhizome, root bark, root, or seed. The extract may be an extract from one part of the plant or two or more parts of the plant. Further, the extract may be an extract from the whole plant body. As described above, the part of the plant to be extracted is not limited. For example, the extract may be an extract from fruit.

In the present invention, examples of the plant of genus *Houttuynia* of the family Saururaceae (*Saururaceae Houttuynia*) include *dokudami* (*Houttuynia cordata* Thunberg), etc. The extract from genus *Houttuynia* of the family Saururaceae may be any extract from flower, flowering spike, fruit skin, fruit, stem, leaf, rhizome, root bark, root, or seed. The extract may be an extract from one part of the plant or two or more parts of the plant. Further, the extract may be an extract from the whole plant body. As described above, the part of the plant to be extracted is not limited. For example, the extract may be an extract from aerial parts such as flower, flowering spike, fruit skin, fruit, stem, leaf, branch, branch with leaf, trunk, and tree bark.

In the present invention, examples of the plant of genus *Vitis* of the family Vitaceae (*Vitaceae Vitis*) include grape (*Vitis vinifera* L.), fox grape (*Vitis labrusca* L.), *amazuru* (*V. saccharifera Makino*), *ebizuru* (*V. ficifolia* Bunge var. lobata (Regel) Nakai), *sankakuzuru* (*V. flexuosa* Thunb.), crimson glory vine (*V. coiguetiae* Pulliat), hybrid grape of European grape and fox grape (*V. labruscana* Bailey), etc. The extract from genus *Vitis* of the family Vitaceae may be any extract from flower, flowering spike, fruit skin, fruit, stem, leaf, branch, branch with leaf, trunk, tree bark, rhizome, root bark, root, or seed. The extract may be an extract from one part of the plant or two or more parts of the plant. Further, the extract may be an extract from the whole plant body. As described above, the part of the plant to be extracted is not limited. For example, the extract may be an extract from leaf.

In the present invention, examples of the plant of genus *Anthemis* of the family Compositae (*Compositae Anthemis (Chamaemelum)*) include Roman chamomile (*Anthemis nobilis* L. *(=Chamaemelum nobile))*, etc. In the present invention, examples of the plant of genus *Matricaria* of the family Compositae (*Compositae Matricaria*) include German chamomile (*Matricaria recutita* L.), etc. The extract from genus *Anthemis* of the family Compositae or genus *Matricaria* of the family Compositae may be any extract from flower, flowering spike, fruit skin, fruit, stem, leaf, rhizome, root bark, root, or seed. The extract may be an extract from one part of the plant or two or more parts of the plant. Further, the extract may be an extract from the whole plant body. As described above, the part of the plant to be extracted is not limited. For example, the extract may be an extract from anthodium.

The extract used in the present invention can be obtained, for example, from the aforementioned desired parts of the plant or from the whole plant body. An extracting method is not limited and examples thereof include a pressing method, a solvent extracting method, etc. An extracting solvent in the solvent extracting method is not limited and examples thereof include an aqueous solvent such as water, an organic solvent, etc. Examples of the organic solvent include lower alcohol such as ethanol, methanol, etc.; absolute ethanol; polyalcohol such as propylene glycol, 1,3-butylene glycol, etc.; ketone such as acetone, etc.; ester such as acetic acid ethyl ester; diethyl ether; dioxane; acetonitrile; xylene; benzene; chloroform; etc. The extracting solvent may be a mixture of the aqueous solvent and the organic solvent, and may be various alcohol aqueous solutions, for example. A specific example thereof includes ethanol aqueous solution. A ratio of the organic solvent in the mixture is, for example, in the range of 5 to 80% by volume. One of the solvents may be used alone or two or more of them may be used in combination.

In the extracting method, the desired part of the plant or the whole plant body, as a material, is soaked in the extracting solvent. The material directly may be soaked in the extracting solvent or may be soaked in the extracting solvent after pulverizing. When two materials are used, the extracting treatment may be applied to each material or may be applied to the mixture of two or more of the materials. When two or more materials are used, a ratio of the materials is not limited. For example, the materials may be added with equal amounts (weight). In a case where the aforementioned four plants are used, the extracting treatment preferably is applied to a mixed material in which each material is added with a dry weight ratio of 1 : 1 : 1 : 1.

A ratio between the material and the extracting solvent is not limited. For example, for 100g of the material, the extracting solvent may be prepared in the range of 0.1 to 1000L and preferably in the range of 1 to 100L. The soaking time of the material in the extracting solvent is not limited and can be set suitably according to the type and amount of the plant, and the type and amount of the extracting solvent. For example, in a case where 100g of the material is soaked in 10L of the extracting solvent, the material is preferably soaked in the extracting solvent for 0.5 hour or more. More preferably, the material is soaked in the extracting solvent for 0.5 to 24 hours.

Conditions of the extraction are not limited. For example, when the extraction is carried out with aqueous solvent such as water, hot water extraction is preferable. Further, in advance of the hot water extraction, the material preferably is soaked in the aqueous solvent under the aforementioned conditions. Heating temperature of the hot water extraction is not limited, however is, for example, 30°C or more, and preferably in the range of 50 to 100°C. Further, treating time of the hot water extraction can be set suitably according to the type and amount of the material to be treated, and the amount of the extracting solvent. For example, in a case where 100g of the material is extracted with 10L of the extracting solvent, the treatment time is preferably 0.5 hour or more, and more preferably 0.5 to 24 hours.

The extract thus-obtained may be used directly as the edible composition or may be used as the edible composition after a purifying treatment. The purifying treatment is not limited and examples thereof include a distilling treatment, a filtering treatment, a chromatography treatment, a drying treatment, etc.

The form of the extract used in the present invention is not limited. For example, the form of the extract can be selected suitably according to the form of the edible composition described later. Specific examples of the form include liquid, paste, emulsion, powder, etc. For example, concentrate and powder are preferable because they are easily processable according to the desired form of the edible composition.

The edible composition used in the present invention is applicable as long as it contains the extract. For example, the edible composition may contain the straight extract or a composition containing the extract and an appropriate diluting agent. The diluting agent is not limited and examples thereof include water, surfactant, glycerin, propylene glycol, alcohol (e.g., ethanol), oil and fat, sugar, polysaccharide (e.g., powder), gummy substance such as gum Arabic, polymer such as dextrin, etc. The edible composition used in the present invention can be prepared into the desired form, for example, by suitably using the diluting agent.

The form of the edible composition used in the present invention is not limited and can be decided suitably according to food and beverage to be applied with the present invention. Examples of the form of the edible composition include liquid, paste, emulsion, gel, powder, granule, tablet, capsule, etc. In a case where the food and beverage to be treated according to the present invention is liquid beverage or gel beverage, for example, the edible composition may be added in the form of liquid, paste, emulsion, gel, etc., or in the form of granule, tablet, capsule, etc. to be dissolved or dispersed in the liquid beverage. In a case where food and beverage to be treated according to the present invention is powder beverage or granule beverage, the edible composition may be incorporated therein in the form of powder, granule, oil and fat mixture, emulsion, etc. In a case where food and beverage to be treated according to the present invention is tablet beverage or capsule beverage, the edible composition may be incorporated in the tablet or capsule. In a case where food and beverage to be treated according to the present invention is food, the edible composition may be incorporated therein in the aforementioned various forms, or the food may be coated or sprayed with the edible composition of liquid, paste, emulsion, etc. Further, the food may be soaked in the edible composition of liquid, paste, emulsion, gel, etc.

A ratio of the extract contained in the edible composition used in the present invention is not limited. For example, in a case where the extract is powder, the extract can be used at the following ratio according to the way of application to the food and beverage. However, this is a mere example and the present invention is not limited thereby. In a case where food and beverage is coated or sprayed with the edible composition, a concentration of the powder extract in the edible composition is preferably in the range of 0.0001 to 99.9% (w/v). Further, in a case where food and beverage is soaked in the edible composition, a concentration of the powder extract in the edible composition is preferably in the range of 0.0001 to 80% (w/v). In a case where the edible composition is incorporated into food and beverage, the powder extract preferably is incorporated such that an amount of the powder extract in the food and beverage is in the range of 0.00001 to 60% (w/v) per weight. From the dietary history of each herb, it is clear that the edible composition used in the present invention is excellent in safety. Therefore, even when the edible composition is applied to all sorts of food and beverage, an amount of intake thereof is not limited, for example.

The food and beverage to which the edible composition is added is not limited at all, and examples thereof include food and beverage itself, material of food and beverage, food and beverage that generates smell during processes of manufacturing, processing, storing, etc. The types of the smell are not limited. It may be a general bad smell, or a smell to be considered to be unpleasant in personal preference. In the present invention, a smell-generating mechanism is not limited. Further, a method of suppressing the smell is not limited at all. The generation itself may be suppressed, or the generated smell or smell of food and beverage and smell of material thereof may be masked. Examples of food and beverage are indicated below. However, the present invention is not limited thereto.

Examples of beverage include fruit beverage such as 100% fruit juice, fruit juice drink, juice with pulp, vegetable juice, tomato juice, drink containing fruit juice flavor, drink containing fruit juice at a low concentration, fruit beverage for dilution, etc. ; carbonated beverage; beverage such as coffee, coffee drink, soft drink with coffee, cocoa, various teas, etc.; refreshing beverage such as vinegar drink, sports drink, etc.; milk; milk beverage; milk-based whey beverage; soy beverage such as soy milk, modified soy milk, etc.; lactic acid beverage; lactobacillus beverage; alcoholic beverage; nutritional beverage containing amino acid, etc.; functional beverage such as collagen drink, gelatin drink, etc.; nutritional beverage containing vitamin, mineral, etc.; etc.

The food to be treated with the present invention includes all sorts of food. Examples of the food include cereal, potato, sugar, confectionery, oil and fat, pulse, seafood, meat, egg, milk, vegetable, fruit, seaweed, seasoning, cooked and processed food, etc. Examples of the cooked and processed food include processed fishery product such as steamed fish paste, fish sausage, etc.; processed livestock product such as ham, sausage, etc.; confectionery such as cake, cookie, biscuit, snack, chocolate, etc.; noodle such as fresh noodle, Chinese noodle, boiled noodle, *soba* noodle, *udon* noodle, spaghetti, etc.; bread; fermented food such as *miso, natto,* etc.; pickle such as rice bran pickle, light pickle, etc.; canned product such as canned vegetable, canned fruit, canned fishery product, canned meat, etc.; dairy product such as cheese, butter, margarine, yogurt, etc.; frozen dessert such as ice cream, sherbet, ice, etc.; soy food such as *tofu,* bean curd refuse, etc.; prepared food; etc.

The edible composition can be applied not only to food and beverage having a general bad smell but also to food and beverage having a smell to be considered to be unpleasant in personal preference. An example of the latter food and beverage includes fermented food such as *natto.* It is known that the *natto* has the smell to be liked or disliked according to individuals, and *natto* is a typical food that has such smell. Further, from the nutritional value thereof, *natto* is considered as an excellent food. Therefore, conventionally, the development of *natto* with reduced smell has been studied so that those who dislike the smell thereof can eat it. Such reduction of the smell of *natto* is realized generally by changing manufacturing conditions such as a process of fermentation (for example, JPB3531070), and *natto* with reduced smell is sold in the market as a commercially-available product. However, in the market, since normal *natto* and *natto* with reduced smell are sold, those who dislike the smell thereof have to select not the normal *natto* but the *natto* with reduced smell. However, the smell of *natto* can be masked simply by adding the edible composition thereto. Therefore, there is no need to select the *natto* with reduced smell from various products. The edible composition is applicable not only to the fermented food such as *natto,* but also to the existing food and beverage according to individual preference. When the edible composition is applied, the food and beverage with the unpleasant smell can be ingested by avoiding the problem of the smell. In recent years, an unbalanced diet is acknowledged as a problem among people of all ages, and one of the reasons for that is peculiar smell of food and beverage. Examples of food and beverage having such smell include vegetable such as cucurbitaceous vegetable such as cucumber, etc., potherb such as celery, garlic, ginger, etc.; pickle; seafood; the aforementioned fermented food; etc. The smell of those food and beverage can be masked by coating, spraying, or incorporating the edible composition to the food and beverage. Further, the smell of those food and beverage also can be masked by soaking the food and beverage in the edible composition. In this manner, even for food and beverage that hardly is ingested depending on individual preference in smell thereof, the smell can be masked and suppressed by the edible composition used in the present invention, for example. Therefore, a wider range of food and beverage can be ingested.

Further, specific examples of food and beverage are as follows. It is known that collagen, collagen peptide, gelatin, milk protein, milk peptide, soy protein, soy peptide, globin protein decomposed substance, or the like has peculiar smell and peculiar flavor (for example, JPA2006-197856, JPB2884244). Therefore, food and beverage containing them preferably are treated with the edible composition according to the present invention. Further, the edible composition is applicable to food and beverage, in which the deteriorated smell of oil is generated (for example, JPA2006-197856).

The treatment timing of the edible composition to food and beverage is not particularly limited. The edible composition may be applied to food and beverage before ingestion, for example. Further, the edible composition also may be applied to food and beverage or material thereof in advance of processes of manufacturing, processing, storing, cooking, etc. The processes of manufacturing, processing, and cooking include, for example, a process of heating. The way of treatment is not limited and can be decided suitably according to forms of the food and beverage or material thereof. As described above, examples of the way of treatment include addition, incorporation, coating, spraying, soaking, etc.

As described above, in a case where the edible composition is applied to food and beverage before ingestion thereof, the smell derived from the food and beverage or the smell derived from the material of the food and beverage can be masked. For example, food and beverage subjected to heat treatment or food and beverage heated (cooked) before ingestion generates smell because of heating. This smell also can be masked by applying the edible composition to the food and beverage before ingestion. In contrast, in a case where the edible composition is applied to food and beverage or material thereof in advance of each process such as during the manufacturing process, not only the smell of the food and beverage or the smell of material thereof before applied with each process is masked but also generation of the smell in each process can be suppressed. Further, even in a case where the smell is generated in each process, they also can be masked. An example of generation of the smell includes a maillard reaction. For example, according to the present invention, the generation of the smell can be reduced by suppressing the maillard reaction generated between an amino compound and sugar. Suppression of the generation of smell is explained below with an example, however the present invention is not limited thereby.

In a case where food and beverage or material thereof include an amino compound and sugar, it is preferable that the edible composition is applied to the food and beverage or the material thereof in advance of a process of storing or a process including a heat treatment in which the maillard reaction is often generated. Thereby, for example, flavor of food and beverage can be improved or maintained by reducing the generation of the smell and further suppressing the smell. Examples of the amino compound include amino acid, polypeptide, protein, etc. The polypeptide includes denatured polypeptide and the protein includes denatured protein. The protein is not limited. Examples of the protein that has peculiar smell and can be a substrate for the maillard reaction include collagen, collagen peptide, gelatin, milk protein, milk peptide, soy protein, soy peptide, globin protein, globin protein decomposed substance, etc. Examples of the sugar include glucose, fructose, maltose, arabinose, xylose, galactose, lactose, invert sugar, reducing sugar such as isomerized sugar, sucrose, oligosaccharide, etc.

Examples of food and beverage to which the edible composition preferably is applied in advance of each process of manufacturing, processing, or storing are as follows. However, the present invention is not limited thereto. For example, commercially available beverage, canned product, and retort food are provided in a container and they normally are subjected to a sterilization treatment by heating. Further, since these food and beverage generally contain an amino compound and sugar, it is considered that the maillard reaction may be generated in the processes of manufacturing, processing, storing, etc. Therefore, it is preferable that the edible composition is added to the food and beverage applied with the heat treatment or preliminarily added to the food and beverage in advance of the heat treatment. Seafood such as fish has a peculiar smell and a cooking smell is further generated by grilling it. With respect to such food, the peculiar smell of the fish and the cooking smell thereof can be masked, for example, by applying the edible composition after cooking. Further, when the seafood is cooked after treatment with the edible composition (e.g., coating, spraying, soaking, etc.), for example, generation of the cooking smell can be suppressed and the peculiar smell, which the fish originally has, can be masked. Since the generation of the smell because of the heat treatment can be suppressed in this manner, for example, spreading of the smell to cooking utensil and kitchen can be prevented.

It is also preferable that the edible composition is applied to food and beverage that generates deteriorated smell by storing, for example.

In this manner, according to the present invention, for example, the peculiar smell of the food and beverage or the smell generated in each process can be masked or the generation of the smell in each process can be suppressed. Therefore, according to the present invention, the flavor of the food and beverage can be improved or maintained.

The present application discloses a method for improving the flavor of food and beverage. The method includes a process in which the edible composition is brought into contact with the food and beverage or the material thereof. The present invention is characterized by using the edible composition, and other processes and conditions are not limited.

In the present invention, a method of using the edible composition is not limited at all. As described above, for example, the edible composition may be applied to the food and beverage by coating, spraying, or incorporating. Further, the food and beverage may be soaked in the edible composition.

An inhibitor used in the method is an inhibitor of the maillard reaction. As for the extract of the inhibitor, the same extract of the edible composition used in the present invention can be used. Since the inhibitor of the present invention inhibits the maillard reaction, the generation of the smell because of the maillard reaction can be prevented. As a result, the flavor of the food can be maintained.

A method of inhibiting is a method of inhibiting the maillard reaction. The method is characterized by bringing the inhibitor in contact with the substrate for the maillard reaction.

The substrate for the maillard reaction to which the inhibitor is applied is not particularly limited. However, it is preferable that the substrate for the maillard reaction is food. Examples of the food are not particularly limited and an example thereof includes the food and beverage or the material thereof that contains an amino compound and sugar therein. A method of using it is not particularly limited and is same as that of the edible composition according to the present invention.

Next, Examples of the present invention are described. However, the present invention is not limited by the following Examples.

[Example 1]

The edible composition was added to collagen beverage, and suppression of the change in flavor due to heat and storage was confirmed.

Preparation of Edible Composition

Dry materials of Roman chamomile (anthodium), *dokudami* (aerial part), Midland hawthorn (fruit), and grape (leaf) are mixed such that each material has an equal amount (weight). This dry mixture (100g) was soaked in purified water (10L) at about 80°C for about 5 hours. Thereby, a plant extract of the dry mixture was extracted. This extract was filtrated to remove residue and filtrate (about 10kg) was collected. The filtrate further was dried to remove solvent (purified water) and 20g of powder substance was obtained. The powder substance was mixed with diluting agents (dextrin, starch, calcium stearate, silicon dioxide, caramel pigment, titanium dioxide, soy-derived lecithin) and an edible composition was obtained.

Preparation of Collagen Beverage

Collagen beverage was prepared by dissolving 3g of porcine-derived collagen (trade name: collagen, manufactured by Hanamai Inc.), 5g of sucrose, 5g of fructose, and 0.1g of citric acid in 100mL of water.

Confirmation of Change in Flavor

(1) Addition of edible composition before heating

The edible composition was added to the collagen beverage such that a concentration of the edible composition becomes a predetermined concentration (0.05% (w/v), 0.1% (w/v)). This collagen beverage was referred to as Example 1-1. Further, a collagen beverage to which the edible composition was not added was referred to as Comparative Example 1-1. These collagen beverages were applied with a thermal sterilization at 110°C for 5 minutes. After the thermal sterilization, each collagen beverage was cooled to room temperature and the flavor thereof was confirmed. As shown below, the flavor of the collagen beverage of Example 1-1 was evaluated by comparing with the collagen beverage of Comparative Example 1-1 (control).

(2) Addition of edible composition after heating

The collagen beverage was subjected to a thermal sterilization at 110°C for 5 minutes. Then, the collagen beverage was cooled to room temperature. Thereafter, the edible composition was added to the collagen beverage such that a concentration of the edible composition becomes a predetermined concentration (0.05% (w/v), 0.1% (w/v)). This collagen beverage was referred to as Example 1-2 and the flavor thereof was confirmed after adding the edible composition. Further, the collagen beverage to which the edible composition was not added after the thermal sterilization was referred to as Comparative Example 1-2 and the flavor thereof was confirmed in the same manner as Example 1-2. As shown below, the flavor of the collagen beverage of Example 1-2 was evaluated by comparing with the collagen beverage of Comparative Example 1-2 (control).

(3) Addition of edible composition before heating + change in flavor over time

The edible composition was added to the collagen beverage such that a concentration of the edible composition becomes a predetermined concentration (0.1% (w/v)). This collagen beverage was referred to as Example 1-3. Further, a collagen beverage to which the edible composition was not added was referred to as Comparative Example 1-3. These collagen beverages were subjected to a thermal sterilization at 110°C for 5 minutes. After the thermal sterilization, each collagen beverage was cooled to room temperature and the flavor thereof was confirmed. Further, these collagen beverages were stored at 35°C, and the flavor thereof after 30 days and 60 days were confirmed. As shown below, the flavor of the collagen beverage of Example 1-3 was evaluated by comparing with the collagen beverage of Comparative Example 1-3 (stored 0 day, control) which was subjected to the thermal sterilization and then cooled to room temperature.

Method of Evaluating Flavor

The flavor of the collagen beverage was evaluated by comparing with the control collagen beverage after the thermal sterilization in accordance with the following evaluation criteria. Evaluation results of five evaluators were averaged and the thus-obtained evaluation results are shown as follows. Generally, the collagen smell is a distinctive smell like glue. Further, the deteriorated smell is a smell, in which collagen is deteriorated, and a smell to which the deteriorated smell by an oxidation of other components is added.

+2: very good as compared to the control
+1: good as compared to the control
0: same as the control
-1: slightly bad as compared to the control
-2: very bad as compared to the control

[Table 1]

| Collagen beverage | Comparative Example 1-1 | Example 1-1 | |
|---|---|---|---|
| | Edible composition 0% | Edible composition 0.05% | Edible composition 0.1% |
| Add before heating | 0 Collagen smell /deteriorated smell | 1.4 Very little collagen smell /deteriorated smell Fairly good flavor | 2.0 Extremely little collagen smell /deteriorated smell Very good flavor |

[Table 2]

| Collagen beverage | Comparative Example 1-2 | Example 1-2 | |
|---|---|---|---|
| | Edible composition 0% | Edible composition 0.05% | Edible composition 0.1% |
| Add after heating | 0 Collagen smell /deteriorated smell | 0.8 Little collagen smell /deteriorated smell Good flavor | 1.4 Very little collagen smell /deteriorated smell Fairly good flavor |

[Table 3]

| Collagen beverage | Comparative Example 1-3 | Example 1-3 |
|---|---|---|
| | Edible composition 0% | Edible composition 0.1% |
| Right after heating | 0 Collagen smell /deteriorated smell | 2.0 Extremely little collagen smell /deteriorated smell Very good flavor |
| After 30 days | -1.0 Worse than right after heating | 1.4 Very little collagen smell /deteriorated smell Fairly good flavor |
| After 60 days | -2.0 Worse than after 30 days | 0.6 Little collagen smell /deteriorated smell Good flavor |

As shown in Table 1, with respect to Example 1-1 in which the edible composition was added to the collagen beverage in advance of the heat treatment, as compared to Comparative Example 1-1 in which the edible composition was not added, the generation of the collagen smell and deteriorated smell was suppressed and the flavor was improved. Further, as shown in Table 2, with respect to Example 1-2 in which the edible composition was added to the collagen beverage after the heat treatment, as compared to Comparative Example 1-2 in which the edible composition was not added, the collagen smell and the deteriorated smell were removed and the flavor was improved. Moreover, as shown in Table 3, with respect to Example 1-3 in which the edible composition was added to the collagen beverage in advance of the heat treatment, as compared to Comparative Example 1-3 in which the edible composition was not added, problems of the collagen smell and deteriorated smell were suppressed even when the collagen beverage was stored for 30 days and 60 days, and the good flavor was maintained for a long period of time.

[Example 2]

The edible composition of the present invention was added to fish, and the flavor of fish was confirmed. The edible composition prepared in Example 1 was used as the flavor improving agent in Example 2.

Confirmation of Change in Flavor

(1) Soaked in edible composition before heating

A edible composition solution was prepared by dissolving the edible composition in water such that a concentration of the edible composition becomes 1% (w/v). *Shishamo (Spirinchus lanceolatus,* dry) and Japanese anchovy (*Engraulis japonica,* raw) respectively were soaked in the edible composition solution at room temperature of 20°C for 10 minutes. After soaking, the fishes were drained and grilled for 10 minutes. The thus-obtained fishes were referred to as Example 2-1. Further, fishes soaked in water instead of the edible composition solution were grilled in the same manner. The thus-obtained fishes were referred to as Comparative Example 2-1. The flavor of these fishes was confirmed. As shown below, each flavor of the *shishamo (Spirinchus lanceolatus,* dry) and the Japanese anchovy (*Engraulis japonica,* raw) of Example 2-1 was evaluated by comparing with Comparative Example 2-1 (control).

(2) Coated with edible composition after heating

*Shishamo (Spirinchus lanceolatus,* dry) and Japanese anchovy (*Engraulis japonica,* raw) were grilled for 10 minutes. After cooking, each surface (whole surface) of the fishes was coated with the edible composition solution. The thus-obtained fishes were referred to as Example 2-2 and the flavor thereof was confirmed. Further, after cooking, each surface (whole surface) of the fishes was coated with water instead of the edible composition solution. The thus-obtained fishes were referred to as Comparative Example 2-2 and the flavor thereof was confirmed in the same manner. As shown below, each flavor of the *shishamo (Spirinchus lanceolatus,* dry) and the Japanese anchovy (*Engraulis japonica,* raw) of Example 2-2 was evaluated by comparing with Comparative Example 2-2 (control).

Method of Evaluating Flavor

Each flavor of the fishes after cooking was evaluated by comparing with the control (*shishamo (Spirinchus lanceolatus)* and Japanese anchovy (*Engraulis japonica*)), to which the edible composition was not applied, in accordance with the following evaluation criteria. Evaluation results of five evaluators were averaged and the thus-obtained evaluation results are shown as follows.

+2: very good as compared to the control
+1: good as compared to the control
0: same as the control
-1: slightly bad as compared to the control
-2: very bad as compared to the control

[Table 4]

| Soak before heating | Comparative Example 2-1 | Example 2-1 |
|---|---|---|
| | Edible composition 0% | Edible composition 1% |
| *Shishamo* (*Spirinchus lanceolatus,* Dry) | 0 Strong fishy smell / grilled smell of fish | 1.8 Very little fishy smell / grilled smell of fish Good flavor |
| Japanese anchovy (*Engraulis japonica,* Raw) | 0 Strong fishy smell / grilled smell of fish | 1.9 Very little fishy smell / grilled smell of fish Good flavor |

[Table 5]

| Coat after heating | Comparative Example 2-2 | Example 2-2 |
|---|---|---|
| | Edible composition 0% | Edible composition 1% |
| *Shichamo* (*Spirinchus lanceolatus*, Dry) | 0 Strong fishy smell / grilled smell of fish | 1.1 Acceptable fishy smell / grilled smell of fish Good flavor |
| Japanese anchovy (*Engraulis japonica*, Raw) | 0 Strong fishy smell / grilled smell of fish | 1.2 Acceptable fishy smell / grilled smell of fish Good flavor |

As shown in Table 4, with respect to Example 2-1 in which the fishes were soaked in the edible composition solution in advance of the heat treatment, as compared to Comparative Example 2-1 in which the fishes were not soaked in the edible composition solution, the fishy smell was removed, generation of fishy smell in grilling was suppressed, and the flavor was improved. Further, as shown in Table 5, with respect to Example 2-2 in which the cooked fishes were coated with the edible composition solution after the heat treatment, as compared to Comparative Example 2-2 in which the cooked fishes were not coated with the edible composition solution, the fishy smell and the grilled smell of fish were removed and the flavor was improved.

[Example 3]

The edible composition was added to rice bran pickle, and the flavor of rice bran pickle was confirmed. The edible composition prepared in Example 1 was used as the edible composition in Example 3.

Confirmation of Change in Flavor

(1) Addition of edible composition to rice bran bed

The edible composition was incorporated into a rice bran bed such that a concentration of the edible composition becomes 1% (w/v). Cucumber was pickled in the rice bran bed at 10°C for 7 days. Thereafter, cucumber was picked up from the rice bran bed and the flavor of the rice bran pickle was confirmed after washing it with water. The thus obtained rice bran pickle was referred to as Example 3-1. Further, cucumber was pickled in the rice bran bed, to which the edible composition was not incorporated, and the flavor of the rice bran pickle was confirmed in the same manner. The thus-obtained rice bran pickle was referred to as Comparative Example 3-1. As shown below, the flavor of the rice bran pickle of Example 3-1 was evaluated by comparing with the rice bran pickle of Comparative Example 3-1 (control).

(2) Soaked in edible composition after pickling

Cucumber was pickled in a rice bran bed, to which the edible composition was not incorporated, at 10°C for 7 days. Thereafter, cucumber was picked up from the rice bran bed and soaked in the edible composition solution of Example 2 (1% (w/v)) at 20°C for 10minutes. Thereafter, the flavor of the rice bran pickle was confirmed. The thus-obtained rice bran pickle was referred to as Example 3-2. Further, cucumber picked up from the rice bran bed was soaked in water under the same conditions, and the flavor of the rice bran pickle was confirmed. The thus-obtained rice bran pickle was referred to as Comparative Example 3-2. As shown below, the flavor of the rice bran pickle of Example 3-2 was evaluated by comparing with the rice bran pickle of Comparative Example 3-2 (control).

Method of Evaluating Flavor

The flavor of the rice bran pickle of cucumber was evaluated by comparing with the control, to which the edible composition was not applied, in accordance with the following evaluation criteria. Evaluation results of five evaluators were averaged and the thus-obtained evaluation results are shown as follows.

+2: very good as compared to the control
+1: good as compared to the control
0: same as the control
-1: slightly bad as compared to the control
-2: very bad as compared to the control

[Table 6]

| Rice bran pickle of cucumber | Comparative Example 3-1 | Example 3-1 |
|---|---|---|
| | Edible composition 0% | Edible composition 1% |
| Add to rice bran bed | 0 Strong peculiar smell of pickle and cucumber | 1.6 Very little peculiar smell of pickle and cucumber Good flavor |

[Table 7]

| Rice bran pickle of cucumber | Comparative Example 3-2 | Example 3-2 |
|---|---|---|
| | Edible composition 0% | Edible composition 1% |
| Soak after pickling | 0 Strong peculiar smell of pickle and cucumber | 1.2 Acceptable peculiar smell of pickle and cucumber Good flavor |

As shown in Table 6, with respect to Example 3-1 in which the edible composition was incorporated into the rice bran bed before pickling, as compared to Comparative Example 3-1 in which the edible composition was not incorporated into the rice bran bed, the peculiar smell of pickle and cucumber were reduced and the flavor of the rice bran pickle was improved. Further, as shown in Table 7, with respect to Example 3-2 in which the cucumber soaked in the rice bran bed was further soaked in the edible composition solution, as compared to Comparative Example 3-2 in which the cucumber soaked in the rice bran bed was not soaked in the edible composition solution, the peculiar smell of pickle and cucumber were suppressed and the flavor of the rice bran pickle was improved.

[Example 4]

The edible composition was added to *natto,* and the flavor of *natto was* confirmed. The edible composition prepared in Example 2 was used as the edible composition in Example 4.

Confirmation of Change in Flavor

0.2g of the edible composition was added to 20g of commercially available *natto* such that a concentration of the edible composition becomes about 1% (w/v), and then mixed. The thus obtained *natto* was referred to as Example 4 and the flavor thereof was confirmed. Further, a commercially available *natto* to which the edible composition solution was not added was referred to as Comparative Example 4 and the flavor thereof was confirmed in the same manner. As shown below, the flavor of the *natto* of Example 4 was evaluated by comparing with Comparative Example 4 (control).

Method of Evaluating Flavor

The flavor of the *natto* was evaluated by comparing with the control, to which the edible composition was not applied, in accordance with the following evaluation criteria. Evaluation results of five evaluators were averaged and the thus-obtained evaluation results are shown as follows.

+2: very good as compared to the control
+1: good as compared to the control
0: same as the control
-1: slightly bad as compared to the control
-2: very bad as compared to the control

[Table 8]

| | Comparative Example 4 | Example 4 |
|---|---|---|
| | Edible composition 0% | Edible composition 1% |
| *natto* | 0 Strong peculiar smell of *natto* | 1.8 No peculiar smell of *natto* Eater-friendly flavor |

As shown in Table 8, with respect to Example 4 in which the edible composition was added to *natto,* as compared to Comparative Example 4 in which the edible composition was not added to *natto,* the peculiar smell of *natto* was suppressed.

[Example 5]

With respect to the edible composition, an inhibitory effect on a maillard reaction was confirmed.

2mL of collagen aqueous solution (40mg/mL), 1mL of glucose aqueous solution (2mol/L), 5mL of phosphate buffer solution (pH7.4, 100mmol/L), and 1mL of distilled water were mixed. As for the collagen, porcine-derived collagen (trade name: collagen, manufactured by Hanamai Inc.), fish collagen (trade name: fish collagen, manufactured by YMC Ingrid), fish-derived collagen peptide (trade name: collagen peptide F-500, manufactured by YASU CHEMICAL INC.) were used, respectively. Relative to 9mL of this mixture, 1mL of edible composition solution, in which the edible composition of Example 1 was dissolved in water such that a concentration of the edible composition becomes in the range of 0.025 to 2.5% (w/v), was added and incubated at 60°C for 40 hours. The concentration of the edible composition in this reaction solution was 0.0025, 0.025, and 0.25% (w/v). Thereafter, the produced amount of the maillard reaction of this reaction solution was measured as fluorescence intensity. With respect to the measurement wave length, an exciting wave length was 370nm and a fluorescence wavelength was 440nm. As a control, 1mL of water instead of 1mL of the edible composition solution was added to 9mL of the mixture and incubated in the same manner. Thereafter, the fluorescence intensity was measured. Then, a maillard reaction inhibition rate of the edible composition was calculated by the following formula.

$$\text{maillard reaction inhibition rate (\%)} = 100 \times (\text{C-E})/\text{C}$$

C: fluorescence intensity of control
E: fluorescence intensity of Example

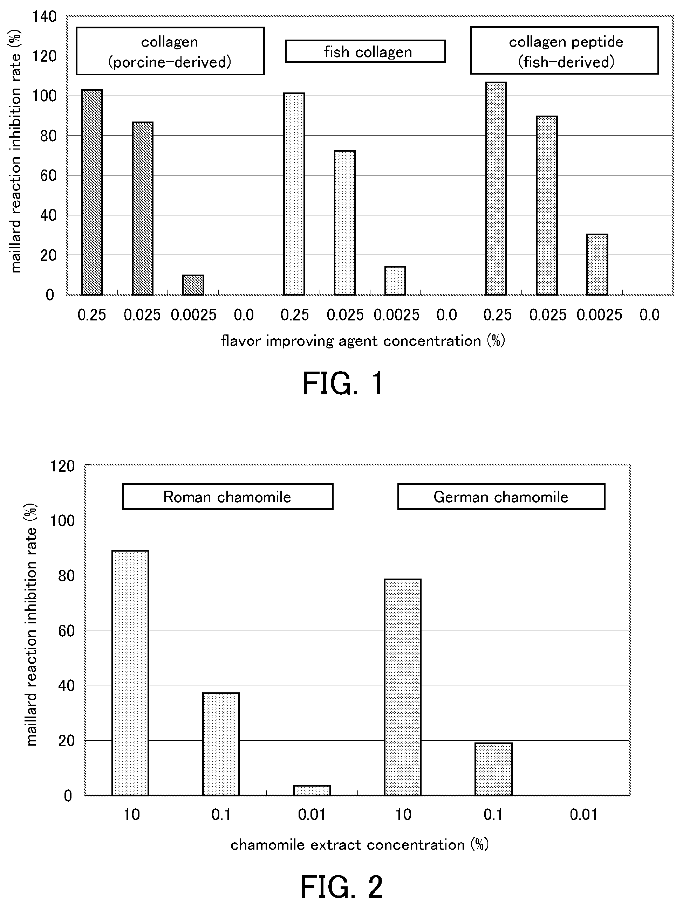

Results thereof are shown in FIG. 1. FIG.1 shows graphs indicating the relationship between a concentration of the edible composition and a rate of the maillard reaction inhibition in the reaction solution. As shown in FIG. 1, it was confirmed that the edible composition of this Example has a maillard reaction inhibitory capacity.

[Example 6] (Reference)

With respect to chamomile extract, a inhibitory effect of maillard reaction was confirmed.

1.5g of dry Roman chamomile (anthodium) dust or 1.5g of dry German chamomile (anthodium) dust were added in 150 mL of hot water (90°C) and left at rest for 15 minutes. Thereafter, the solution was filtrated and each chamomile extract was obtained.

2mL of collagen aqueous solution (40mg/mL), 1mL of glucose aqueous solution (2mol/L), 5mL of phosphate buffer solution (pH7.4, 100mmol/L), and 1mL of distilled water were mixed. As for the collagen, porcine-derived collagen (trade name: collagen, manufactured by Hanamai Inc.) was used. Relative to 9mL of this mixture, 1mL of the Roman chamomile extract or 1mL of German chamomile extract was added and incubated at 60°C for 40 hours. Thereafter, the produced amount of the maillard reaction of this reaction solution was measured in the same manner as Example 5 and a rate of the maillard reaction inhibition was calculated. As for the control, the measurement was carried out in the same manner as Example 5 except that 1mL of water instead of 1mL of chamomile extract was added to the 9mL of the mixture.

These results are shown in FIG. 2. FIG.2 shows graphs indicating the relationship between a concentration of the chamomile extract and a rate of the maillard reaction inhibition. As shown in FIG.2, it was confirmed that the Roman chamomile extract and the German chamomile extract have nearly equal inhibitory effect of maillard reaction.

Industrial Applicability

As described above, according to the use of the edible composition, for example, the peculiar smell of material of food and beverage, and smell generated in processes of manufacturing, processing, storing, etc. can be suppressed. Further, according to the use of the edible composition, the aforementioned smell of food and beverage can be suppressed by masking, for example. In addition, the maillard reaction in each process can be inhibited and generation of smell component due to the maillard reaction can be suppressed by applying the edible composition to the food and beverage in advance of the process of heating or storing. Moreover, the smell generated regardless of the maillard reaction and the aforementioned peculiar smell of material of food and beverage also can be suppressed by masking, for example. Extracts contained in the edible composition used in the present invention are derived from plants (herb) that have dietary history and are familiar in dietary life. Therefore, safety of the use of the edible composition is sufficiently supported and the flavor of the food and beverage to which the edible composition is added would not be damaged. Further, since preparation of the extract from the aforementioned each herb is very simple, the edible composition used in the present invention is suitable for industrial manufacturing and can be manufactured at a low price.

**Claims**

1. Use of an edible composition for improving flavor of food and beverage, wherein the edible composition contains a mixed extract from a plant of genus Crataegus of the family Rosaceae, a plant of genus Houttuynia of the family Saururaceae, a plant of genus Vitis of the family Vitaceae, and a plant of genus Anthemis of the family Compositae or genus Matricaria of the family Compositae.

2. The use according to claim 1, wherein the extract is at least one of a hot water extract and an organic solvent extract.

3. The use according to claim 1, wherein the food and beverage is food containing at least one amino compound selected from the group consisting of amino acid, polypeptide, and protein.

4. The use according to claim 3, wherein the amino compound is at least one selected from the group consisting of collagen, collagen peptide, gelatin, soy protein, soy peptide, milk protein, and milk peptide.

5. The use according to claim 1, wherein the food and beverage is food and beverage containing sugar.

6. The use according to claim 1, wherein the food and beverage is heated or stored food and beverage, or food and beverage before heating or storing.

7. The use according to claim 1, wherein the food and beverage is fermented food, pickle, or seafood.

**Patentansprüche**

1. Verwendung einer essbaren Zusammensetzung zur Verbesserung des Geschmacks von Nahrungsmitteln und Getränken, worin die essbare Zusammensetzung einen gemischten Extrakt aus einer Pflanze der Gattung Crataegus der Familie Rosaceae, einer Pflanze der Gattung Houttuynia der Familie Saururaceae, einer Pflanze der Gattung Vitis der Familie Vitaceae und einer Pflanze der Gattung Anthemis der Familie Compositae oder der Gattung Matricaria der Familie Compositae enthält.

2. Verwendung nach Anspruch 1, worin der Extrakt zumindest einer von einem Heißwasserextrakt und einem organischen Lösungsmittelextrakt ist.

3. Verwendung nach Anspruch 1, worin das Nahrungsmittel und Getränk ein Nahrungsmittel mit zumindest einer Aminoverbindung ist, ausgewählt aus der Gruppe bestehend aus einer Aminosäure, Polypeptid und Protein.

4. Verwendung nach Anspruch 3, worin die Aminoverbindung zumindest eine ist, ausgewählt aus der Gruppe bestehend aus Kollagen, Kollagenpeptid, Gelatine, Sojaprotein, Sojapeptid, Milchprotein und Milchpeptid.

5. Verwendung nach Anspruch 1, worin das Nahrungsmittel und Getränk Nahrungsmittel und Getränk mit Zucker ist.

6. Verwendung nach Anspruch 1, worin das Nahrungsmittel und Getränk ein erwärmtes oder gelagertes Nahrungsmittel und Getränk oder Nahrungsmittel und Getränk vor Erwärmung und Lagerung ist.

7. Verwendung nach Anspruch 1, worin das Nahrungsmittel und Getränk fermentiertes Nahrungsmittel, eingelegtes Gemüse oder Meeresfrüchte sind.

**Revendications**

1. Utilisation d'une composition exhausteur de goût pour améliorer le goût d'aliments et de boissons, dans laquelle la composition exhausteur de goût contient un extrait mélangé à partir d'une plante du genre Crataegus de la famille Rosaceae, d'une plante du genre Houttuynia de la famille Saururaceae, d'une plante du genre Vitis de la famille Vitaceae et d'une plante du genre Anthemis de la famille Compositae ou du genre Matricaria de la famille Compositae.

2. Utilisation selon la revendication 1, dans laquelle l'extrait est au moins un extrait choisi parmi un extrait d'eau chaude et un solvant organique.

3. Utilisation selon la revendication 1, dans laquelle les aliments et les boissons consistent en des aliments contenant au moins un composé amino choisi parmi le groupe consistant en un acide amino, un polypeptide, et une proétine.

4. Utilisation selon la revendication 3, dans laquelle le composé amino est au moins un composé amino choisi parmi le groupe consistant en du collagène, de la peptide collagène, de la gélatine, de la protéine de soja, de la peptide de soja, de la protéine de lait et de la peptide de lait.

5. Utilisation selon la revendication 1, dans laquelle les aliments et les boissons consistent en des aliments et de boissons contenant du sucre.

6. Utilisation selon la revendication 1, dans laquelle les aliments et les boissons sont chauffés ou consistent en des aliments et boissons stockés, ou consistent en des aliments ou boissons avant d'être chauffés ou stockés.

7. Utilisation selon la revendication 1, dans laquelle les aliments et le boissons consistent en des aliments fermentés, de la saumure ou des fruits de mer.

FIG. 1

FIG. 2

**EP 2 087 797 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006197856 A
- JP 2006197857 A
- JP 2006280310 A